# FASCICULE DE BREVET EUROPEEN

(11) **EP 1 742 887 B1**
(45) Date de publication et mention de la délivrance du brevet: **26.12.2007**
(21) Numéro de dépôt: 05746713.6
(22) Date de dépôt: 07.04.2005
(51) Int. Cl.: C03B 37/04, C03B 37/06

(54) **PROCEDE ET DISPOSITIF DE FORMATION DE FIBRES MINERALES**
VERFAHREN UND VORRICHTUNGEN ZUR HERSTELLUNG VON MINERALFASERN
METHOD AND DEVICE FOR PRODUCING MINERAL FIBRES

(30) Priorité: 04.05.2004 FR 0404749
(43) Date de publication de la demande: 17.01.2007
(73) Titulaire: SAINT-GOBAIN ISOVER, 92400 Courbevoie (FR)
(72) Inventeur: BOULANOV, Oleg, F-60180 Nogent Sur Oise (FR)
(74) Mandataire: Aupetit, Muriel J. C.
(86) Numéro de dépôt international: PCT/FR2005/050216
(87) Numéro de publication internationale: WO 2005/113461

(56) Documents cités:
- EP-A- 0 189 354
- FR-A- 2 401 110
- US-A- 4 135 903

## Description

L'invention concerne l'étirage de fibres minérales résultant de l'action de courants gazeux.

On connaît comme procédé de fibrage, le procédé par centrifugation dite externe. La matière à fibrer est déversée à l'état fondu sur la bande périphérique de roues de centrifugation mues en rotation, est accélérée par ces roues, s'en détache et est transformée pour partie en fibres sous l'effet de la force centrifuge, un courant gazeux émis tangentiellement à la bande périphérique des roues entraînant les fibres ainsi formées vers une réception et les séparant de la matière infibrée.

Cette technique de fibrage déjà fort ancienne conduit à des rendements et une qualité des fibres produites généralement bien inférieurs à ce qui peut être obtenu selon une autre technique combinant centrifugation et étirage gazeux, nommé encore procédé de fibrage par centrifugation dite interne.

Le procédé de fibrage par centrifugation interne consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Au moyen d'un brûleur annulaire, ces filaments sont alors soumis à l'action d'un courant annulaire gazeux d'étirage à température et vitesse élevées longeant la paroi du centrifugeur qui les amincit et les transforme en fibres.

Par ailleurs, le courant gazeux d'étirage est généralement confiné, au moyen d'une nappe gazeuse froide enveloppante le canalisant de manière adéquate. Cette nappe gazeuse est produite par une couronne de soufflage entourant le brûleur annulaire. Froide, elle permet de plus d'aider au refroidissement des fibres dont la résistance mécanique est ainsi améliorée par un effet de trempe thermique.

Cependant, dans ce dernier type de procédé, le courant gazeux provenant du haut de l'assiette, engendre un étirage plus fort au niveau du haut de l'assiette qu'au niveau du bas entraînant une inhomogénéité de l'ensemble des fibres. Pour obtenir une meilleure homogénéité des fibres, il est connu d'adapter le diamètre des trous de l'assiette en conséquence, les trous du bas de l'assiette étant plus petits que ceux du haut. Toutefois, cette configuration entraîne une complexité de fabrication de l'assiette.

Par ailleurs, ce procédé use l'assiette ayant généralement une durée de vie limitée d'environ trois cents heures, or le remplacement de celle-ci est onéreux.

En outre, il est nécessaire de prévoir des systèmes de refroidissement à associer aux brûleurs, ce qui n'est pas sans alourdir la complexité du dispositif final d'étirage.

L'invention a donc pour but de fournir un autre procédé de fibrage dont le dispositif est moins complexe que ceux de l'art antérieur et dont le rendement est tout aussi performant accompagné d'une homogénéité satisfaisante des fibres obtenues.

Selon l'invention, le procédé de formation de fibres minérales dans lequel on soumet au moins un filet de matière vitrifiable à l'état fondu à l'action d'un courant gazeux d'étirage dans une zone d'étirage, le courant gazeux dans la zone d'étirage se présentant sous la forme d'un vortex, est caractérisé en ce que le vortex est situé au moins en partie dans une chambre de combustion dans laquelle est créée une zone de combustion entre au moins un comburant et au moins un combustible, et on introduit le filet dans la zone de combustion de la chambre de combustion.

L'invention tire profit du fait qu'un écoulement vortex présente de façon caractéristique une zone de moindre vitesse et pression formant le creux du tourbillon, puis une augmentation de vitesse progressive lorsqu'on s'éloigne radialement de cette zone centrale.

La zone centrale se comporte, vis-à-vis du filet de matière vitrifiable entrant, comme une zone d'aspiration à partir de laquelle la matière en fusion est entraînée et progressivement étirée au fur et à mesure que la vitesse du fluide environnant augmente.

Il en résulte des conditions de fibrage très douces par opposition aux procédés connus où le filament de matière vitrifiable rencontre assez brutalement un courant gazeux de vitesse élevée constante.

De préférence, la zone de combustion est située au moins en partie dans la zone d'étirage, et l'écoulement dans la zone de combustion suit les lignes du courant du vortex.

Dans cette configuration, la zone centrale du vortex est une zone d'aspiration pour le combustible et le comburant frais, où se produit le mélange inflammable. La combustion crée une zone chaude au coeur du vortex, et les températures décroissent vers l'extérieur de l'écoulement.

Ces conditions permettent de réduire avantageusement les sollicitations thermiques et mécaniques des organes métalliques entourant la zone de combustion, la zone chaude du vortex étant confinée à distance desdits organes. On n'a donc plus la nécessité d'utiliser des systèmes de refroidissement comme dans l'art antérieur.

Selon une autre caractéristique, la combustion est maintenue stable dans le vortex par l'adaptation de la vitesse de combustion à l'entrée de la zone de combustion.

Avantageusement, le comburant disponible autour de la zone de combustion est brassé de façon à minimiser le volume de comburant apporté et renouvelé.

Selon une autre caractéristique, la matière en fusion présente une viscosité comprise entre 50 et 300 poiseuilles.

On peut introduire le filet de matière vitrifiable dans une zone de moindre vitesse et pression du vortex que l'on peut réguler en contrôlant la direction d'entrée du comburant dans la zone d'étirage et/ou de combustion.

L'invention est également relative à un dispositif d'étirage de fibres minérales. Celui-ci comporte un organe d'alimentation en matière vitrifiable en fusion qui délivre la matière dans une zone d'étirage équipée de moyens d'amenée de gaz d'étirage, la configuration de la zone d'étirage étant adaptée pour créer un écoulement gazeux en forme de vortex, et est caractérisé en ce que le dispositif comporte une chambre de combustion dans laquelle débouchent des conduits d'alimentation en combustible et en comburant, les gaz de combustion formant de préférence une partie du gaz d'étirage dans la zone d'étirage.

Selon une caractéristique, le dispositif comporte des moyens pour régler la vitesse d'amenée de gaz d'étirage afin d'entretenir et maintenir stable le vortex.

Des moyens de variation de la vitesse et de direction d'arrivée du comburant, qui peuvent constituer les moyens réglant la vitesse d'amenée de gaz d'étirage, sont prévus dans la chambre de combustion de manière à maintenir stable la combustion et à pouvoir déplacer les zones chaudes du vortex par rapport aux parois de la chambre.

Avantageusement, la chambre de combustion est à symétrie axiale, notamment cylindrique. De plus, l'agencement d'au moins un des conduits d'alimentation en combustible et comburant produit une arrivée tangentielle dudit gaz dans la chambre de combustion.

Selon une autre caractéristique, la chambre de combustion comporte une paroi externe et une paroi interne de façon à agencer entre les deux parois une cavité périphérique recevant le comburant, la paroi interne présentant une partie ouverte périphérique qui assure la liaison entre la cavité et l'intérieur de la chambre où est destinée à se situer la zone de combustion.

Avantageusement, les moyens de variation de la vitesse et de la direction d'arrivée du comburant sont constitués d'ailettes aptes à pivoter et aptes à être maintenues fixes en pivotement selon un angle variable d'inclinaison pour obturer partiellement de manière variable la paroi interne au travers de laquelle arrive le comburant à l'intérieur de la chambre.

Aussi, les ailettes sont, d'une part fixées à la paroi interne au niveau de la partie ouverte, et d'autre part, solidaires d'un élément périphérique disposé dans la cavité et dont l'actionnement assure le pivotement des ailettes.

De préférence, il comporte un agitateur mécanique agencé à l'intérieur de la chambre apte à brasser le comburant, la configuration et la disposition de l'agitateur étant conçues pour ne pas entraver la zone de combustion. Cet agitateur constitue des moyens complémentaires pour régler la vitesse d'amenée du comburant ou gaz d'étirage afin de contrôler le vortex,

De façon à fournir au sein de la chambre la matière en fusion à fibrer, l'organe d'alimentation de la matière est associé à un alésage agencé dans la chambre de combustion, plus particulièrement dans sa partie supérieure.

Des moyens de distribution sont avantageusement associés à l'organe d'alimentation, et consistent par exemple en une filière dont le fond est percé d'orifices au travers desquels s'écoule la matière. En variante, les moyens de distribution consistent en un panier percé d'orifices au travers desquels s'écoule la matière, le panier pouvant être rotatif.

Enfin, le dispositif comporte de préférence un diffuseur disposé dans le prolongement de la zone d'étirage, ce diffuseur assurant une continuité de l'étirage des fibres.

Ainsi, le dispositif présente par les caractéristiques citées plus haut, des facilités d'allumage, de stabilité de la combustion, de réglage des paramètres, et assure une réponse rapide aux réglages effectués pour l'adaptation du fibrage souhaité.

L'invention s'applique à la fabrication de matériaux fibreux tels que notamment des produits d'isolation thermique et/ou phonique à base de laine minérale, dans lesquels les fibres minérales sont éventuellement liées entre elles par un liant approprié.

Les fibres fabriquées par le dispositif de l'invention présentent très avantageusement une longueur et un diamètre homogènes qui sont fixés en adaptant les paramètres que sont en particulier la vitesse et la quantité d'air soufflé dans la chambre de combustion. Les fibres qui peuvent aussi bien être courtes que longues (moins de 2,5 cm jusqu'à environ 1m) ont un diamètre fixé sur une large gamme dimensionnelle, de 0,5 à 25 µm.

Les termes inférieur et supérieur dans la suite de la description doivent être compris comme les parties plus basse et respectivement plus haute d'un élément en regard du dispositif de l'invention qui mis en place pour son fonctionnement reçoit l'écoulement de la matière à fibrer du haut vers le bas.

D'autres avantages et caractéristiques de l'invention vont à présent être décrits plus en détail en regard des dessins annexés sur lesquels :
- la figure 1 représente une vue schématique en coupe du dispositif de mise en oeuvre du procédé selon l'invention;
- la figure 2 illustre une vue en coupe et de dessus du dispositif;
- la figure 3 représente une vue partielle d'une variante de réalisation de l'écoulement de la matière à étirer dans le dispositif;
- la figure 4 représente une vue partielle d'une autre variante de réalisation de l'écoulement de la matière à étirer dans le dispositif.

Ces figures sont schématiques sans être strictement à l'échelle pour en faciliter la lecture.

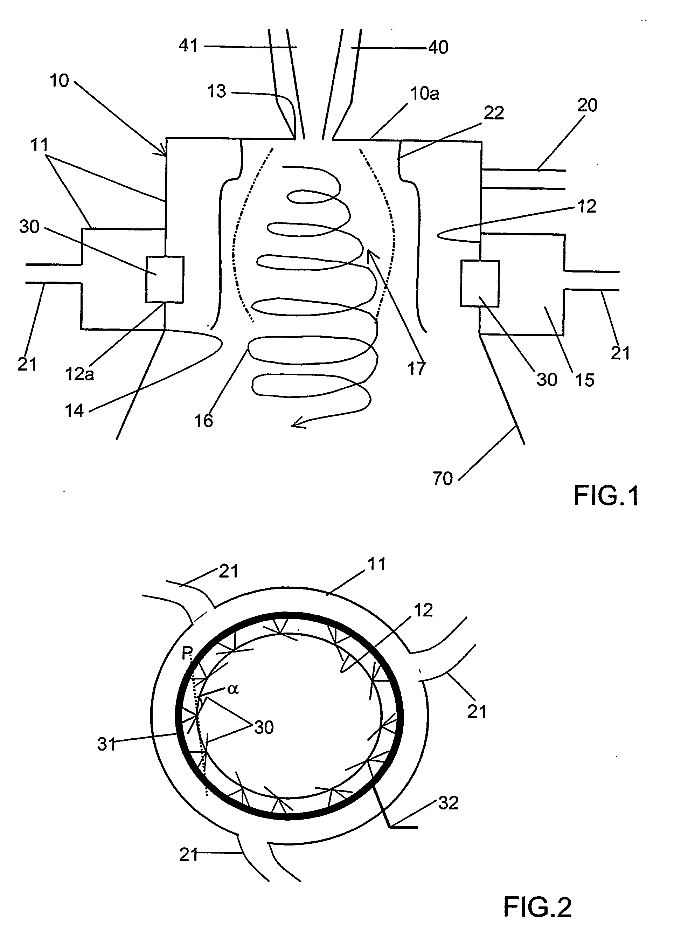

La figure 1 représente, en coupe transversale et selon un plan vertical, un dispositif 1 de mise en oeuvre du procédé d'étirage de fibres minérales selon l'invention.

Le dispositif comporte une chambre de combustion 10, au moins un conduit d'alimentation 20 d'un combustible tel qu'un gaz, au moins un conduit d'alimentation 21 d'un comburant tel que de l'air, et des moyens de variation de vitesse et de direction 30 du comburant distribué dans la chambre.

La chambre de combustion 10 comprend une paroi latérale externe 11, une paroi latérale interne 12 ouverte en 12a sur l'ensemble de sa périphérie, un alésage 13 agencé dans la face supérieure 10a de la chambre, ainsi qu'une ouverture 14 opposée à l'alésage, agencée dans la face inférieure de la chambre et délimitée par la paroi interne12.

Les parois externe 11 et interne 12 définissent une cavité périphérique 15. Les parois 11 et 12 ayant des sections de forme cylindrique, la cavité 15 se présente sous la forme d'une couronne creuse.

Le conduit d'alimentation 20 de gaz débouche de préférence directement dans la partie supérieure de la chambre de combustion au travers de la paroi externe 11, tandis que les conduits d'alimentation en air 21, ici au nombre de trois, débouchent dans la partie inférieure de la chambre, dans la couronne creuse 15. Les trois conduits d'alimentation en air qui sont avantageusement placés à équidistance sur la périphérie de la cavité ainsi que la présence de cette cavité permettent d'homogénéiser le volume d'air débouchant dans l'ensemble de la chambre.

La délivrance d'air selon une vitesse adaptée dans la chambre 10 engendre la création d'un courant gazeux qui se présente sous la forme d'un vortex. Le vortex s'étend dans une zone 16 destinée à constituer la zone d'étirage.

Lorsqu'à son tour, le combustible est délivré, il se mélange à l'air et, par l'allumage d'une bougie usuelle agencée dans la chambre de combustion non illustrée sur les figures, le mélange s'enflamme créant une zone de combustion 17 confinée dans la zone repérée en traits discontinus sur la figure.

Le mélange adéquat du comburant et du combustible dans la chambre 10, la vitesse adaptée de l'arrivée du comburant dans la chambre et la configuration de la chambre entraînent un positionnement de la zone de combustion 17 dans la zone d'étirage 16. La zone d'étirage présentant une forme de vortex assure à la combustion de suivre les lignes de courant du vortex..

Les moyens de variation de vitesse et de direction 30 de l'air arrivant dans la chambre 10 sont solidaires de la paroi interne 12 et sont destinés à obturer de manière variable la partie ouverte 12a de cette paroi.

Les moyens de variation de vitesse et de direction 30 sont constitués par des ailettes qui sont fixées, en leurs extrémités supérieure et inférieure, de part et d'autre de la partie ouverte 12a. Ces ailettes sont aptes à pivoter autour d'un axe qui passe par leurs points de fixation à la paroi 12a. Elles sont aptes à être maintenues en position fixe selon un angle choisi d'inclinaison α par rapport au plan P tangentiel aux points de fixation d'une ailette (figure 2).

Les ailettes 30 sont par ailleurs solidaires au niveau de leur axe de rotation d'un élément périphérique 31, tel qu'un disque, disposé dans la couronne creuse 15 de la chambre et dont la rotation assure le pivotement desdites ailettes. Ce disque est relié à un organe de préhension 32 dont l'actionnement permet la rotation du disque et est associé à des moyens de verrouillage en rotation du disque (non illustrés).

Les ailettes permettent de gérer la variation de surface d'obturation de la partie ouverte 12a, avec pour conséquence de faire varier la vitesse et la direction d'arrivée de l'air dans la chambre de combustion. Plus l'angle d'inclinaison α est grand, c'est-à-dire moins est fermée la partie ouverte 12a de la paroi, moins l'air est accéléré lorsqu'il débouche dans la chambre. Tandis que plus l'angle d'inclinaison α est faible, les ailettes étant donc orientées le plus tangentiellement possible à la paroi interne 12 en fermant le plus possible la partie ouverte 12a, plus l'air est accéléré en arrivant dans la chambre.

La variation de la vitesse et de la direction d'arrivée d'air dans la chambre engendre le déplacement de la zone chaude de la combustion 17 et par suite modifie les conditions d'étirage, en particulier la vitesse d'étirage et la température d'étirage, ce qui influe sur la finesse des fibres, leur longueur et leur résistance à la traction.

Ainsi, pour favoriser l'emplacement de la zone chaude au centre de la chambre pour lequel la vitesse de l'air est la plus faible, l'angle d'inclinaison des ailettes doit être le plus grand possible, la partie ouverte 12a étant au minimum obturée. Tandis que plus la partie ouverte 12a est obturée, plus on augmente la vitesse de l'air arrivant dans la chambre, ce qui déplace la zone chaude vers la paroi interne de la chambre.

En outre, cette arrivée tangentielle de l'air par rapport à la surface de la paroi de la chambre de combustion assure son refroidissement continu sans nécessiter l'utilisation de systèmes de refroidissement complémentaires.

Afin de maintenir le vortex et la combustion stables, il est nécessaire d'assurer une rotation permanente de l'air dans la chambre. Aussi, on apporte en quantité suffisante de l'air comprimé, ou bien en variante, on utilise des moyens mécaniques de brassage de l'air. Il est ainsi prévu dans cette dernière variante, la présence d'un agitateur mécanique 22 au sein de la chambre 10 qui assure le brassage du mélange de combustion et entretient ainsi le vortex sans avoir à insuffler de manière continue une nouvelle quantité d'air.

Cet agitateur 22 est par exemple constitué de pales rotatives fixées en partie supérieure de la chambre et s'étendant jusqu'au bas de l'ouverture 14. Elles présentent une forme adaptée de façon à agencer la place suffisante à la création du vortex et à son maintien.

L'étirage des fibres se fait par l'écoulement de matière en fusion dans le vortex. La matière s'écoule depuis un organe d'alimentation 40 auquel est raccordé le dispositif et passe au travers de l'alésage 13.

Plusieurs variantes de réalisation peuvent être envisagées pour l'écoulement de la matière depuis l'organe d'alimentation vers la chambre de combustion.

Selon une premier mode de réalisation, la matière s'écoule directement au travers de l'alésage 13.

Selon un second mode de réalisation, la matière s'écoule par l'alésage 13 via des moyens de distribution.

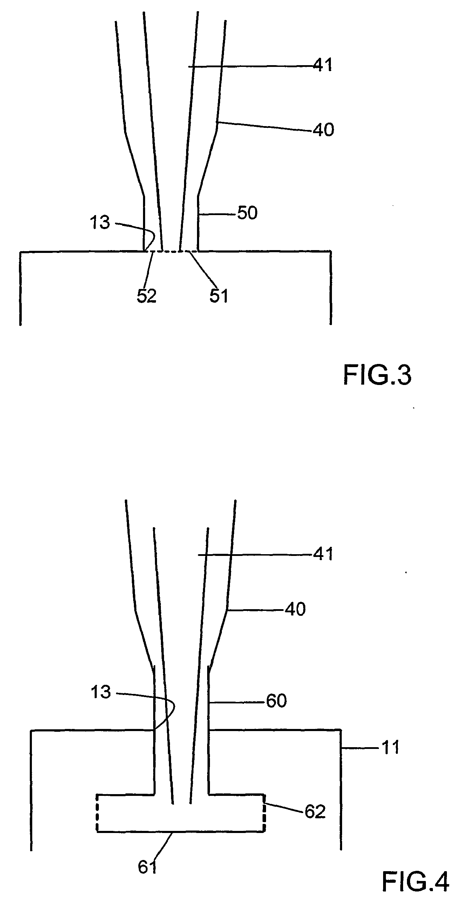

Les moyens de distribution, tels qu'illustrés sur la figure 3, peuvent être constitués d'une filière intermédiaire 50 qui est agencée entre le canal d'alimentation 40 et la face supérieure de la chambre de combustion. La filière comporte un fond 51 qui présente une largeur équivalente à celle de l'alésage 13 et est disposé au niveau de ce dernier. Le fond 51 est pourvu d'une pluralité d'orifices 52 depuis lesquels s'écoulent des filaments primaires de la matière en fusion, ces filaments étant destinés à être étirés dans la chambre.

Dans une variante de la figure 4, les moyens de distribution sont constitués par un arbre creux 60 à l'extrémité duquel est fixé un panier 61. L'arbre, traversant l'alésage 13, relie le canal d'alimentation 40 au panier qui est disposé à l'intérieur de la chambre de combustion. La paroi latérale du panier 61 est percée d'orifices 62 d'où est éjecté, sous la forme de filaments primaires, le matériau en fusion à étirer. Avantageusement, le panier 61 peut être mis en rotation.

Enfin, pour favoriser l'étirage, un diffuseur 70, tel qu'un cône tronqué, peut être associé à la chambre de combustion dans le prolongement de l'ouverture 14.

Il permet de canaliser les courants gazeux issus de la combustion dans la chambre, ces courants de haute température assurant une continuité et une fin d'étirage pour obtenir des fibres encore plus longues et plus fines.

Le procédé d'étirage de l'invention va à présent être décrit en regard du dispositif de mise en oeuvre décrit ci-dessus.

On délivre dans la chambre de combustion du comburant selon une vitesse adaptée pour créer un courant gazeux sous forme de vortex.

Puis on alimente en combustible la chambre de combustion 10. Lorsque le mélange de comburant et de combustible est adéquat, on créé une étincelle par l'allumage de la bougie, ce qui enflamme aussitôt le mélange créant une zone de combustion 17.

La vitesse d'amenée du comburant est adaptée pour que la combustion suive les lignes de courant du vortex.

On délivre la matière en fusion s'écoulant depuis l'alésage 13 de la chambre directement dans la zone de combustion 17. L'étirage s'amorce et se poursuit par l'écoulement de la matière qui suit les lignes de courant du vortex. Les gaz confinés au niveau du diffuseur 70 permettent de prolonger les conditions d'étirage.

Les fibres sont ensuite réceptionnées à la sortie du dispositif.

Le diamètre et la longueur des fibres obtenues sont variables selon les conditions d'étirage fixées, en particulier en fonction de l'emplacement du vortex et donc de la vitesse d'arrivée de l'air à l'intérieur de la chambre, de la présence du diffuseur, du type d'écoulement de la matière (avec ou sans distributeur).

Dans une autre forme de réalisation, la zone d'étirage peut être dissociée de la zone de combustion. Des moyens d'amenée de gaz d'étirage, pouvant être constitués par les conduits d'alimentation 21, la couronne de soufflage 15 et ses ailettes 30 ainsi qu'éventuellement l'agitateur 22, sont prévus pour créer la zone d'étirage sous forme de vortex.

## Revendications

1. Procédé de formation de fibres minérales dans lequel on soumet au moins un filet (41) de matière vitrifiable à l'état fondu à l'action d'un courant gazeux d'étirage dans une zone d'étirage (17), le courant gazeux dans la zone d'étirage se présentant sous la forme d'un vortex, **caractérisé en ce que** le vortex est situé au moins en partie dans une chambre de combustion (10) dans laquelle est créée une zone de combustion (17) entre au moins un comburant et au moins un combustible, et on introduit le filet (41) dans la zone de combustion (17) de la chambre de combustion.

2. Procédé selon la revendication 1, **caractérisé en ce que** la zone de combustion (17) est située au moins en partie dans la zone d'étirage (16) et l'écoulement dans la zone de combustion suit les lignes du courant du vortex.

3. Procédé selon la revendication 2, **caractérisé en ce que** la combustion est maintenue stable dans le vortex par l'adaptation de la vitesse de combustion à l'entrée de la zone de combustion.

4. Procédé selon la revendication 2 ou 3, **caractérisé en ce que** le comburant disponible autour de la zone de combustion est brassé de façon à minimiser le volume de comburant apporté et renouvelé.

5. Procédé selon l'une quelconque des revendications précédentes, **caractérisé en ce que** la viscosité de la matière en fusion à l'entrée de la zone de combustion est comprise entre 50 et 300 poiseuilles.

6. Procédé selon l'une quelconque des revendications précédentes, **caractérisé en ce que** l'on introduit le filet de matière vitrifiable (41) dans une zone de moindre vitesse et pression du vortex.

7. Procédé selon la revendication 6, **caractérisé en ce que** l'on régule la position de ladite zone de moindre vitesse et de pression en contrôlant la direction d'entrée du comburant dans la zone d'étirage (16) et/ou de combustion (17).

8. Dispositif pour la fabrication de fibres minérales comportant un organe d'alimentation (40) en matière vitrifiable en fusion (41), l'organe délivrant la matière dans une zone d'étirage (16) équipée de moyens d'amenée de gaz d'étirage, la configuration de la zone d'étirage étant adaptée pour créer un écoulement gazeux en forme de vortex, **caractérisé en ce qu'**il comporte une chambre de combustion (10) dans laquelle débouchent des conduits d'alimentation en combustible et en comburant (20, 21), les gaz de combustion formant une partie du gaz d'étirage dans la zone d'étirage (16).

9. Dispositif selon la revendication 8, **caractérisé en ce qu'**il comporte des moyens (30, 22) pour régler la vitesse d'amenée de gaz d'étirage.

10. Dispositif selon la revendication 8, **caractérisé en ce qu'**il comporte des moyens de variation de la vitesse et de direction (30) d'arrivée du comburant dans la chambre de manière à maintenir stable la combustion.

11. Dispositif selon la revendication 8, **caractérisé en ce que** la chambre de combustion (10) est à symétrie axiale, notamment cylindrique.

12. Dispositif selon l'une des revendications 8 à 11, **caractérisé en ce que** l'agencement d'au moins un des conduits d'alimentation en combustible et comburant produit une arrivée tangentielle dudit gaz dans la chambre de combustion.

13. Dispositif selon l'une quelconque des revendications 8 à 12, **caractérisé en ce que** la chambre de combustion (10) comporte une paroi externe (11) et une paroi interne (12) de façon à agencer entre les deux parois une cavité périphérique (15) recevant le comburant, la paroi interne (12) présentant une partie ouverte périphérique (12a) qui assure la liaison de la cavité (15) vers l'intérieur de la chambre (10) où est destinée à se situer la zone de combustion (17).

14. Dispositif selon la revendication 13, **caractérisé en ce que** les moyens de variation de la vitesse et de la direction (30) d'arrivée du comburant sont constitués d'ailettes aptes à pivoter et aptes à être maintenues fixes en pivotement selon un angle variable d'inclinaison (α) pour obturer partiellement de manière variable la paroi interne (12) au travers de laquelle arrive le comburant à l'intérieur de la chambre.

15. Dispositif selon la revendication 14, **caractérisé en ce que** les ailettes (30) sont, d'une part fixées à la paroi interne (12) au niveau de la partie ouverte (12a), et d'autre part, solidaires d'un élément périphérique (31) disposé dans la cavité (15) et dont l'actionnement assure le pivotement des ailettes.

16. Dispositif selon l'une quelconque des revendications 8 à 15, **caractérisé en ce qu'**il comporte un agitateur mécanique (22) agencé à l'intérieur de la chambre (10) apte à brasser le comburant, la configuration et la disposition de l'agitateur étant conçues pour ne pas entraver la zone de combustion (16).

17. Dispositif selon l'une quelconque des revendications 8 à 16, **caractérisé en ce que** l'organe d'alimentation (40) est associé à un alésage (13) agencé dans la chambre de combustion (10).

18. Dispositif selon la revendication 17, **caractérisé en ce qu'**il comporte des moyens de distribution (50) associés à l'organe d'alimentation qui consistent en une filière à fond (51) percé d'orifices (52) au travers desquels s'écoule la matière.

19. Dispositif selon la revendication 17, **caractérisé en ce qu'**il comporte des moyens de distribution (60) associés à l'organe d'alimentation qui consistent en un panier rotatif (61) percé d'orifices (62) au travers desquels s'écoule la matière.

20. Dispositif selon l'une quelconque des revendications 8 à 19, **caractérisé en ce qu'**il comporte un diffuseur (70) disposé dans le prolongement de la zone d'étirage.

21. Application du procédé selon l'une des revendications 1 à 7 ou du dispositif selon l'une des revendications 8 à 20 à la fabrication de matériaux fibreux tels que notamment des produits d'isolation thermique et/ou phonique à base de laine minérale.

## Claims

1. A process for forming mineral fibers, in which at least one stream (41) of vitrifiable material in the molten state is subjected to the action of an attenuating gas flow in an attenuation zone (16), the gas flow in the attenuation zone being in the form of a vortex **characterized in that** the vortex is located at least partly in a combustion chamber (10) in which a combustion zone (17), for combustion between at least one oxidizer and at least one fuel, is created and the stream (41) is introduced into the combustion zone (17) of the combustion chamber.

2. The process as claimed in claim 1, **characterized in that** the combustion zone (17) is located at least partly in the attenuation zone (16) and the stream in the combustion zone follows the lines of the vortex flow.

3. The process as claimed in claim 2, **characterized in that** the combustion is stabilized in the vortex by adapting the combustion rate at the inlet of the combustion zone.

4. The process as claimed in claim 2 or 3, **characterized in that** the oxidizer available around the combustion zone is stirred so as to minimize the volume of oxidizer supplied and replenished.

5. The process as claimed in any one of the preceding claims, **characterized in that** the viscosity of the molten material at the inlet of the combustion zone is between 50 and 300 Pa.s.

6. The process as claimed in any one of the preceding claims, **characterized in that** the stream of vitrifiable material (41) is introduced into a lower velocity/pressure zone of the vortex.

7. The process as claimed in claim 6, **characterized in that** the position of said lower velocity/pressure zone is regulated by controlling the direction of entry of the oxidizer into the attenuation zone (16) and/or the combustion zone (17).

8. A device for the manufacture of mineral fibers, which comprises a feed channel (40) for feeding the molten vitrifiable material (41), the channel delivering the material into an attenuation zone (16) equipped with attenuation gas inlet means, the configuration of the attenuation zone being designed to create a gas flow in the form of a vortex, **characterized in that** it includes a combustion chamber (10) into which fuel and oxidizer feed lines (20, 21) run, the combustion gases forming part of the attenuation gas in the attenuation zone (16).

9. The device as claimed in claim 8, **characterized in that** it includes means (30, 22) for regulating the attenuation gas inlet velocity.

10. The device as claimed in claim 8, **characterized in that** it includes means (30) for varying the velocity and the direction of the oxidizer entering the chamber so as to stabilize the combustion.

11. The device as claimed in claim 8, **characterized in that** the combustion chamber (10) has axial, especially cylindrical, symmetry.

12. The device as claimed in one of claims 8 to 11, **characterized in that** the arrangement of at least one of the fuel and oxidizer feed lines forces said gas to enter the combustion chamber tangentially.

13. The device as claimed in any one of claims 8 to 12, **characterized in that** the combustion chamber (10) has an external wall (11) and an internal wall (12) so as to leave between the two walls a peripheral cavity (15) that receives the oxidizer, the internal wall (12) having a peripheral open portion (12a) that links the cavity (15) to the inside of the chamber (10) where the combustion zone (17) is intended to be located.

14. The device as claimed in claim 13, **characterized in that** the means (30) for varying the oxidizer inlet velocity and direction consist of fins that are capable of pivoting and capable of being fixed, by pivoting about a variable angle of inclination (α) in order to partially close off, in a variable manner, the internal wall (12) through which the oxidizer enters into the chamber.

15. The device as claimed in claim 14, **characterized in that** the fins (30) are, on the one hand, attached to the internal wall (12) in the open portion (12a) and, on the other hand, fastened to a peripheral element (31) placed in the cavity (15), the actuation of the peripheral element causing the fins to pivot.

16. The device as claimed in any one of claims 8 to 15, **characterized in that** it includes a mechanical stirrer (22) placed inside the chamber (10) and capable of stirring the oxidizer, both the configuration and the arrangement of the stirrer being designed not to impede the combustion zone (17).

17. The device as claimed in any one of claims 8 to 16, **characterized in that** the feed channel (40) is linked to a bore (13) made in the combustion chamber (10).

18. The device as claimed in claim 17, **characterized in that** it includes delivery means (50) linked to the feed channel, which means consist of a bushing having a bottom plate (51) that is pierced with orifices (52) through which the material flows.

19. The device as claimed in claim 17, **characterized in that** it includes delivery means (60) linked to the feed channel, which means consist of a rotating basket (61) pierced with orifices (62) through which the material flows.

20. The device as claimed in any one of claims 8 to 19, **characterized in that** it includes a diffuser (70) placed in the extension of the attenuation zone.

21. The application of the process as claimed in one of claims 1 to 7 or of the device as claimed in one of claims 8 to 20 for the manufacture of fibrous materials, such as especially thermal and/or acoustic insulation products based on mineral wool.

## Patentansprüche

1. Verfahren zum Bilden von Mineralfasern, in dem wenigstens ein Strang (41) aus einem Glasmaterial in geschmolzenem Zustand der Wirkung eines Gasstromes zum Ziehen in einer Ziehzone (17) unterworfen wird, wobei der Gasstrom in der Ziehzone die Form eines Wirbels aufweist, **dadurch gekennzeichnet, dass** sich der Wirbel wenigstens teilweise ein einer Brennkammer (10) befindet, in der eine Verbrennungszone (17) zwischen wenigstens einem Verbrennungsmittel und einem Brennmaterial hergestellt wird und wobei der Strang (41) in die Verbrennungszone (17) der Brennkammer eingeführt wird.

2. Verfahren nach Anspruch 1, **dadurch gekennzeichnet, dass** sich die Verbrennungszone (17) wenigstens teilweise in der Ziehzone (16) befindet und die Strömung in der Verbrennungszone den Linien der Strömung des Wirbels folgt.

3. Verfahren nach Anspruch 2, **dadurch gekennzeichnet, dass** die Verbrennung in dem Wirbel durch Anpassen der Verbrennungsgeschwindigkeit am Eingang der Verbrennungszone stabil aufrechterhalten wird.

4. Verfahren nach Anspruch 2 oder 3, **dadurch gekennzeichnet, dass** das um die Verbrennungszone herum verfügbare Verbrennungsmittel auf eine Weise gemischt wird, dass das Volumen des zugeführten und erneuerten Verbrennungsmittels minimiert wird.

5. Verfahren nach einem der vorhergehenden Ansprüche, **dadurch gekennzeichnet, dass** die Viskosität des Materials der Schmelze am Eingang der Verbrennungszone einen Bereich von 50 bis 300 Pa.S umfasst.

6. Verfahren nach einem der vorhergehenden Ansprüche, **dadurch gekennzeichnet, dass** der Strang aus Glasmaterial (41) in eine Zone mit geringerer Geschwindigkeit und Druck des Wirbels eingeführt wird.

7. Verfahren nach Anspruch 6, **dadurch gekennzeichnet, dass** die Position der Zone mit geringerer Geschwindigkeit und Druck durch Steuern der Eintrittsrichtung des Verbrennungsmittels in die Ziehzone (16) und/oder die Verbrennungszone (17) gesteuert wird.

8. Vorrichtung zum Herstellen von Mineralfasern, die eine Zuleitungseinrichtung (40) für ein geschmolzenes Glasmaterial (41) aufweist, wobei die Einrichtung das Material einer mit Mitteln zum Zuführen für das Ziehgas ausgestatteten Ziehzone (16) zuführt, wobei der Aufbau der Ziehzone angepasst ist, um eine Gasströmung in Form eines Wirbels herzustellen, **dadurch gekennzeichnet, dass** sie eine Brennkammer (10) aufweist, in die Zuführungsleitungen für das Verbrennungsmittel und das Brennmaterial (20, 21) einmünden, und das Verbrennungsgas einen Teil des Ziehgases in der Ziehzone (16) bildet.

9. Vorrichtung nach Anspruch 8, **dadurch gekennzeichnet, dass** sie Mittel (30, 22) zum Steuern der Geschwindigkeit der Zuführung des Ziehgases aufweist.

10. Vorrichtung nach Anspruch 8, **dadurch gekennzeichnet, dass** sie Mittel zum Verändern der Geschwindigkeit und der Richtung (30) des Eintritts des Verbrennungsmittels in die Kammer aufweist, so dass die Verbrennung stabil gehalten wird.

11. Vorrichtung nach Anspruch 8, **dadurch gekennzeichnet, dass** die Brennkammer (10) eine axiale, insbesondere zylindrische Symmetrie aufweist.

12. Vorrichtung nach einem der Ansprüche 8 bis 11, **dadurch gekennzeichnet, dass** die Anordnung wenigstens einer der Zuführungsleitungen für das Brennmaterial und das Verbrennungsmittel einen tangentialen Eintritt des Gases in die Brennkammer herstellt.

13. Vorrichtung nach einem der Ansprüche 8 bis 12, **dadurch gekennzeichnet, dass** die Brennkammer (10) eine Außenwand (11) und eine Innenwand (12) aufweist, so dass ein peripherer Hohlraum (15) zwischen beiden Wänden angeordnet wird, der das Verbrennungsmittel aufnimmt, wobei die Innenwand (12) einen offenen peripheren Teil aufweist (12a), welcher die Verbindung des Holraums (15) mit dem Inneren der Kammer (10) sicherstellt, wo sich die Verbrennungszone (17) befinden soll.

14. Vorrichtung nach Anspruch 13, **dadurch gekennzeichnet, dass** die Mittel zum Verändern der Geschwindigkeit und der Richtung (30) des Eintritts des Verbrennungsmittels aus Flügeln gebildet sind, die zum Schwenken geeignet sind und die geeignet sind in einem veränderlichen Neigungswinkel (α) eingeschwenkt fest gehalten zu werden, um die Innenwand (12), durch deren Mitte das Verbrennungsmittel in das Innere der Kammer eintritt, in einer veränderbaren Weise teilweise abzudichten.

15. Vorrichtung nach Anspruch 14, **dadurch gekennzeichnet, dass** die Flügel (30) einerseits an der Innenwand (12) in Höhe des offenen Teils (12a) befestigt sind und andererseits mit einem peripheren Bauteil (31), das in dem Hohlraum (15) angeordnet ist und dessen Betätigung das Schwenken der Flügel sicherstellt, verbunden sind.

16. Vorrichtung nach einem der Ansprüche 8 bis 15, **dadurch gekennzeichnet, dass** sie ein im Innern der Kammer (10) angebrachtes mechanisches Rührwerk (22) aufweist, das geeignet ist das Verbrennungsmittel zu mischen, wobei der Aufbau und die Anordnung des Rührwerks konzipiert sind, um die Verbrennungszone (16) nicht zu beeinträchtigen.

17. Vorrichtung nach einem der Ansprüche 8 bis 16, **dadurch gekennzeichnet, dass** die Zuleitungseinrichtung (40) mit einer in der Brennkammer (10) angebrachten Bohrung (13) verbunden ist.

18. Vorrichtung nach Anspruch 17, **dadurch gekennzeichnet, dass** sie mit der Zuleitungseinrichtung verbundene Mittel zur Verteilung (50) aufweist, die aus einem Netz (51) bestehen, das mit Öffnungen (52) durchbohrt ist, durch deren Mitte das Material fließt.

19. Vorrichtung nach Anspruch 17, **dadurch gekennzeichnet, dass** das sie mit der Zuleitungseinrichtung verbundene Mittel zur Verteilung (60) aufweist, die aus einem rotierenden Korb (61) bestehen, der mit Öffnungen (62) durchbohrt ist, durch deren Mitte das Material fließt.

20. Vorrichtung nach einem der Ansprüche 8 bis 19, **dadurch gekennzeichnet, dass** sie einen in der Verlängerung der Ziehzone angebrachten Diffusor (70) aufweist.

21. Verwendung des Verfahrens nach einem der Ansprüche 1 bis 7 oder der Vorrichtung nach einem der Ansprüche 8 bis 20 zum Herstellen von Fasermaterialien, wie insbesondere Produkte zur Wärmedämmung und/oder zur Schalldämmung auf Basis von Mineralwolle.
